# EUROPEAN PATENT SPECIFICATION

(11) **EP 1 981 945 B1**
(45) Date of publication and mention of the grant of the patent: **28.03.2012**
(21) Application number: 07717234.4
(22) Date of filing: 09.02.2007
(51) Int. Cl.: C09J 133/08, C09J 133/10, C09J 7/02, C08J 5/18, C08L 33/14

(54) **IMAGE RECEIVING MATERIAL AND IMAGE RECEIVING SHEET**
BILDEMPFANGSMATERIAL UND BILDEMPFANGSFOLIE
MATIÈRE DESTINÉE À RECEVOIR UNE IMAGE ET FEUILLE DESTINÉE À RECEVOIR UNE IMAGE

(30) Priority: 10.02.2006 JP 2006033904
(43) Date of publication of application: 22.10.2008
(73) Proprietor: 3M Innovative Properties Company, St. Paul, MN 55133-3427 (US)
(72) Inventor: ABE, Hidetoshi,, Setagaya, Tokyo 158-8583 (JP); TAKAMATSU, Yorinobu,, Setagaya, Tokyo 158-8583 (JP)
(74) Representative: Vossius & Partner
(86) International application number: PCT/US2007/003605
(87) International publication number: WO 2007/095136

(56) References cited:
- EP-A1- 0 454 379
- WO-A1-2005/023913
- WO-A2-03/070837
- JP-A- 10 310 754
- JP-A- 2000 025 348
- JP-A- 2001 030 642

## Description

### FIELD

The present invention relates to an image receiving material and an image receiving sheet.

### BACKGROUND

Vinyl chloride resin films have been widely used in the past as image receptors for solvent-based ink jet printing applications. Although vinyl chloride resin film is superior in terms of image quality, there were limitations on its ink absorption rate. Considerable time was required for drying, and it was necessary to use additional equipment to shorten drying time. Additionally, although vinyl chloride resin films have solvent-based ink jet printing and image thermal transfer characteristics, they have problems in terms of flexibility, ink adhesion and solvent resistance. A technology that is able to satisfy these characteristics has yet to be disclosed.

With respect to flexibility, for example, since acrylic resins have a comparatively high glass transition temperature (Tg), plasticizers are typically added to the vinyl chloride resin film to impart flexibility at normal temperatures. However, there was the risk of decreased adhesion between the film surface and ink due to migration of the plasticizer. With respect to solvent resistance, since acrylic resins have satisfactory affinity with solvents, in the case of printing with a highly concentrated ink (ink concentration of 300% or more, there was the risk of the film dissolving resulting in a poor appearance due to the effects of the solvent. In addition, although acrylic resins have satisfactory solvent affinity, absorb ink rapidly and have superior drying properties, there are cases in which saturation decreases as a result of ink penetrating into the film, and particularly in the case of opaque, white film.

Patent Document 1 (Japanese Patent No. 3516035) discloses a blended composition of a carboxyl group-containing polymer and amino group-containing polymer. The composition disclosed therein is an adhesive composition, and is not assumed to be used as an image receiver.

Patent Document 2 (Japanese Unexamined Patent Publication No. 2005-105256) discloses a (meth)acrylic film formed from a carboxyl group-containing (meth)acrylic polymer, an amino group-containing (meth)acrylic polymer, and a crosslinking agent having a functional group that reacts with a carboxyl group. This film is described as having high tensile strength and elongation characteristics. This document discloses the use thereof as an image receiving sheet, and although it describes thermal transfer of electrostatic recording toner images, there is no disclosure whatsoever regarding solvent-based ink jet printing. In addition, it is also disclosed that a receptor layer (image receiving layer) is provided on an image receiving surface, so that adhesion between the toner and film can be increased.

Patent Document 3 (Japanese Unexamined International Publication No. 2003-533366) discloses a base layer and an ink receiving base material containing an ink receiving layer thereon. An example of a material of the ink receiving layer is a blend of polyalkyloxazoline and polyolefin. This document only discusses receiving characteristics in the case of ink jet printing.

Patent Document 4 (Japanese Unexamined International Publication No. 2004-531416) discloses an image receptor containing an ink receiving layer containing a copolymer of methyl methacrylate and butyl acrylate or a copolymer of methyl methacrylate and isobutyl methacrylate. This document only discusses receiving characteristics in the case of ink jet printing.

### Summary

At present, means for forming an image consist primarily of ink jet printing and image thermal transfer using an electrostatic recording toner, and image receiving sheets for image formation are desired to have an image receiving layer that is compatible with both of these image forming means. Therefore, an object of the present invention is to provide an image receiving material and an image receiving sheet having an image receiving layer comprising thereof that has satisfactory characteristics in both ink jet printing and electrostatic recording toner image thermal transfer.

According to one of its aspects, the present invention provides an image receiving material consisting of a (meth)acrylic polymer in which a (meth)acrylic polymer containing both a unit derived from a carboxyl group-containing monomer and a unit derived an amino group-containing monomer, or a polymer blend of a (meth)acrylic polymer containing a unit derived from a carboxyl group-containing monomer and a (meth)acrylic polymer containing a unit derived from an amino group-containing polymer, is crosslinked by a crosslinking agent having a functional group that reacts with the carboxyl group or the amino group; wherein the total weight of the carboxyl group-containing monomer and the amino group-containing monomer is 0.5 to 10% by weight based on the total weight of the monomers that compose the (meth)acrylic polymer,
wherein the crosslinked density of the crosslinked (meth)acrylic polymer is the crosslinked density formed by 0.01 to 0.5 equivalents of the crosslinking agent with respect to the carboxyl group or the amino group in the (meth)acrylic polymer that is reacted by the crosslinking agent, and wherein
the glass transition temperature (Tg) of the crosslinked (meth)acrylic polymer is 35 to 90°C.

According to another of its aspects, the present invention provides an image receiving material as described above, wherein the carboxyl group-containing (meth)acrylic polymer is a carboxyl group-containing (meth)acrylic polymer obtained by copolymerizing a monoethylenic unsaturated monomer within a range of 90 to 95.5 parts by weight and a carboxyl group-containing unsaturated monomer within a range of 0.5 to 10 parts by weight, and the amino group-containing (meth)acrylic polymer is an amino group-containing (meth)acrylic polymer obtained by copolymerizing a monoethylenic unsaturated monomer within a range of 90 to 95.5 parts by weight and an amino group-containing unsaturated monomer within a range of 0.5 to 10 parts by weight.

According to still another of its aspects, the present invention provides an image receiving material as described above, wherein the (meth)acrylic polymer is the product of grafting polyethylene imine to a (meth)acrylic polymer of a carboxyl group-containing monomer.

According to still another of its aspects, the present invention provides an image receiving material as described above, wherein the crosslinking agent is a bisamide-based crosslinking agent.

According to still another of its aspects, the present invention provides an image receiving material as described above, wherein the crosslinking agent is an epoxy-based crosslinking agent.

According to still another of its aspects, the present invention provides an image receiving sheet comprising (i) a base material and (ii) an image receiving layer formed on the base material, the image receiving layer containing an image receiving material as described above.

According to still another of its aspects, the present invention provides an image receiving sheet as described above, wherein the base material is a (meth)acrylic polymer.

According to still another of its aspects, the present invention provides an image receiving sheet with adhesive layer having an adhesive layer on the opposite side of the base material of the image receiving sheet described above.

According to still another of its aspects, the present invention provides an image receiving sheet with adhesive layer comprising: a layer comprising an image receiving material described above and an adhesive layer.

Furthermore, the "glass transition temperature (Tg)" refers to the glass transition temperature (Tg) of the (meth)acrylic polymer after crosslinking, and is measured by using a sample having a film thickness of 50 µm and film width of 1 cm, as a temperature of the peak of tanδ according to the dynamic viscoelasticity measurement method over a temperature range of-20 to 150°C while increasing the temperature at the rate of 5°C/second under conditions of a tensile mode, tensile strain of 0.1% (maximum elongation relative to the initial length of the measurement sample) and frequency of 10 Hz.

According to the present invention, an image receiving material and image receiving layer comprising thereof have superior printing appearance and ink adhesion in both ink jet printing and electrostatic recording toner image thermal transfer, the resulting image has solvent resistance, and ink drying during ink jet printing is satisfactory.

### DETAILED DESCRIPTION

The following provides an explanation of the present invention based on suitable embodiments thereof. Although an explanation is provided of the case of using an image receiving material as an image receiving layer on a base material, the image receiving material can also be used as an image receiving film or molded product and so forth from only of a layer comprising the image receiving material.

An image receiving material of the present invention is a (meth)acrylic polymer containing both a unit derived from a carboxyl group-containing monomer and a unit derived from an amino group-containing monomer, and which is crosslinked by a crosslinking agent having a functional group that reacts with the carboxyl group or the amino group. Since this (meth)acrylic polymer contains both a unit derived from a carboxyl group-containing monomer and a unit derived from an amino group-containing monomer, it is able to impart satisfactory adhesion between the ink and image receiving material when used as an image receiving material for ink jet printing or electrostatic recording toner image thermal transfer. In addition, since the carboxyl group and amino group derived from these monomers cause an interaction within the polymer, there is the effect of increasing the cohesive strength of the image receiving material. Moreover, the carboxyl group and the amino group improve adhesion with the base material when the image receiving material is used as an image receiving layer on a base material.

In addition, the total amount of carboxyl group-containing monomer and amino group-containing monomer in the (meth)acrylic polymer is 0.5 to 10% by weight based on the total weight of the monomers that compose the aforementioned (meth)acrylic polymer. If the amount of carboxyl group-containing monomer and/or amino group-containing monomer is too little, interaction by these functional groups is weak and the resulting crosslinked density is too low. As a result, adhesive force becomes inadequate and a weak image receiving layer is formed, and in the case of using a highly concentrated solvent ink in particular, the image receiving material may dissolve. Moreover, in the case the image receiving material demonstrates adhesion and is used as an image receiving layer on an image receiving sheet, blocking between the films may occur. Moreover, adhesion between the base material of the image receiving sheet and the image receiving layer may be inadequate. Conversely, if the amount of carboxyl group-containing monomer and/or amino group-containing monomer is too great, the glass transition temperature (Tg) of the resulting image receiving material becomes high, and the image receiving material becomes hard and brittle while lacking flexibility and low-temperature characteristics.

A (meth)acrylic polymer that composes an image receiving material of the present invention is crosslinked by a crosslinking agent having a functional group that reacts with a carboxyl group or an amino group. The crosslinked density is the crosslinked density formed by 0.01 to 0.5 equivalents of the aforementioned crosslinking agent with respect to the carboxyl group or amino group in the (meth)acrylic polymer that is reacted by the crosslinking agent. If the crosslinked density is too high, penetration of the solvent ink into the image receiving layer becomes inferior resulting in illegible images and the occurrence of bleeding. Moreover, since the penetrability of the ink is low, the ink adhesion and drying properties after printing become poor. Conversely, if the crosslinked density is too low, the image receiving layer becomes weak, and in the case of using a highly concentrated solvent ink in particular, the image receiving material may dissolve.

The glass transition temperature (Tg) of the (meth)acrylic polymer after crosslinking is 35 to 90°C. Tg is preferably 45°C or higher and more preferably 55°C or higher. An image receiving material of the present invention is typically used in the form of an image receiving layer, and is obtained by, for example, applying a coating composition containing a (meth)acrylic polymer onto a base material and forming an image receiving layer to obtain an image receiving sheet of the present invention. Although such an image receiving sheet is normally stored by rolling into the shape of a roll, if the Tg of the polymer is 35°C or lower, the image receiving sheet partially adheres during storage and becomes difficult to unwind from the roll, or a portion of the receiving layer ends up separating. The glass transition temperature (Tg) is measured in the following manner after having crosslinked the (meth)acrylic polymer with a crosslinking agent. The glass transition temperature (Tg) is the glass transition temperature (Tg) of the (meth)acrylic polymer after crosslinking, and is measured as a temperature of the peak of tanδ according to the dynamic viscoelasticity measurement method over a temperature range of -20 to 150°C while increasing the temperature at the rate of 5°C/second under conditions of a tensile mode, tensile strain of 0.1% (maximum elongation relative to the initial length of the measurement sample) and frequency of 10 Hz.

In one aspect of the present invention, the image receiving material is formed by a carboxyl group-containing (meth)acrylic polymer, an amino group-containing (meth)acrylic polymer, and a crosslinking agent that reacts with the carboxyl group or the amino group. In the present specification, "(meth)acrylic" refers to acrylic or methacrylic. The aforementioned carboxyl group-containing (meth)acrylic polymer is obtained by copolymerizing a monoethylenic unsaturated monomer and a carboxyl group-containing unsaturated monomer. The aforementioned amino group-containing (meth)acrylic polymer is obtained by copolymerizing a monoethylenic unsaturated monomer and an amino group-containing unsaturated monomer.

This polymerization is preferably carried out by radical polymerization. In this case, known polymerization methods such as solution polymerization, suspension polymerization, emulsion polymerization or bulk polymerization can be used. Examples of initiators used include organic peroxides such as benzoyl peroxide, lauroyl peroxide and bis(4-tertiary-butyl cyclohexyl) peroxide carbonate, and azo-based polymerization initiators such as 2,2'-azobisisobutyronitrile, 2,2'-azobis- 2-methylbutyronitrile, 4,4'-azobis-4-cyanovaleric acid, 2,2'-azobis(2-methylpropionic acid) dimethyl and azobis-2,4-dimethylvaleronitrile (AVN). The amount of this initiator used should be 0.05 to 5 parts by weight per 100 parts by weight of monomer mixture.

Although there are no particular limitations on the weight average molecular weight of the aforementioned polymer, it is normally 10,000 or more, preferably 50,000 or more, and more preferably 100,000 or more. Furthermore, this weight average molecular weight refers to the molecular weight on the basis of styrene as determined by gel permeation chromatography (GPC). If the molecular weight is too high, there is the risk of difficulty in application since the polymer solution has a high viscosity, while if the molecular weight is too low, there is a risk of a decrease in the yield point elongation percentage and yield point strength as well as weather resistance.

The monoethylenic unsaturated monomer that composes the (meth)acrylic polymer is the main component of that polymer, and in addition to typically being that represented with the formula CH₂=CR₁COOR₂ (wherein, R₁ represents a hydrogen atom or methyl group and R₂ represents a linear or branched alkyl group, phenyl group, alkoxyalkyl group or phenoxyalkyl group), also includes aromatic vinyl monomers such as styrene, α-methyl styrene and vinyl toluene, and vinyl esters such as vinyl acetate. Examples of such monomers include methyl (meth)acrylate, ethyl (meth)acrylate, n-butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, dodecyl (meth)acrylate, phenoxyalkyl (meth)acrylates such as phenoxyethyl (meth)acrylate and alkoxyalkyl (meth)acrylates such as methoxypropyl (meth)acrylate and 2-methoxybutyl (meth)acrylate, and one or more types are used corresponding to the purpose in order to obtain a desired glass transition temperature and so forth.

For example, the Tg of the resulting (meth)acrylic polymer can be raised by copolymerizing a (meth)acrylic monomer such as methyl methacrylate (MMA) or n-butyl methacrylate (BMA) for which the Tg of the homopolymer when polymerized alone is 0°C or higher.

In addition, the Tg of the resulting (meth)acrylic polymer can be lowered by copolymerizing a (meth)acrylic monomer such as ethyl acrylate (EA), n-butyl acrylate (BA) or 2-ethylhexyl acrylate (2EHA) for which the Tg of the homopolymer when polymerized alone is 0°C or lower.

Examples of unsaturated monomers containing a carboxyl group that compose a carboxyl group-containing (meth)acrylic polymer by copolymerizing with the aforementioned monoethylenic unsaturated monomer include acrylic acid, methacrylic acid, maleic acid, itaconic acid, ω-carboxy polycaprolactone monoacrylate, phthalic acid monohydroxyethyl (meth)acrylate, β-carboxyethyl acrylate, 2-(meth)acryloyloxy ethyl succinate and 2-(meth)acryloyloxy ethyl hexahydrophthalate.

If a carboxyl group-containing (meth)acrylic polymer is obtained by copolymerizing a monoethylenic unsaturated monomer specifically within the range of 90 to 95.5 parts by weight, and a carboxyl group-containing unsaturated monomer within the range of 0.5 to 10 parts by weight, the amount of carboxyl group-containing monomer in the (meth)acrylic polymer is 0.5 to 10% by weight. As a result, by blending with an amino group-containing (meth)acrylic polymer to be described later, the total amount of carboxyl group-containing monomer and amino group-containing monomer in the (meth)acrylic polymer can easily be made to be 0.5 to 10% by weight based on the total weight of the monomers that compose the (meth)acrylic polymer.

Examples of amino group-containing unsaturated monomers that compose the amino group-containing (meth)acrylic polymer by copolymerizing with the monoethylenic unsaturated monomer include monomers having a tertiary amino group represented by dialkylamino alkyl (meth)acrylates such as N,N- dimethylamino ethyl acrylate (DMAEA) and N,N-dimethylamino ethyl methacrylate (DMAEMA), dialkylamino alkyl (meth)acrylamides such as N,N-dimethylamino propyl acrylamide (DMAPAA) and N,N-dimethylamino propyl methacrylamide, and monomers having a tartiary amino group such as vinyl monomers having a nitrogen-containing hetero ring such as vinyl imidazole.

If the amino group-containing (meth)acrylic polymer is obtained by copolymerizing a monoethylenic unsaturated monomer specifically within the range of 90 to 95.5 parts by weight, and an amino group-containing unsaturated monomer within the range of 0.5 to 10 parts by weight, the amount of amino group-containing monomer in the (meth)acrylic polymer is 0.5 to 10% by weight. As a result, by blending with the aforementioned carboxyl group-containing (meth)acrylic polymer, the total amount of carboxyl group-containing monomer and amino group-containing monomer in the (meth)acrylic polymer can easily be made to be 0.5 to 10% by weight based on the total weight of the monomers that compose the (meth)acrylic polymer.

An image receiving material composed of a (meth)acrylic polymer of the present invention can be obtained by blending suitable amounts of the aforementioned carboxyl group-containing (meth)acrylic polymer, amino group-containing (meth)acrylic polymer and crosslinking agent.

According to another aspect of the present invention, a (meth)acrylic polymer may be used that contains both a carboxyl group and an amino group in a single polymer. For example, a polymer may be used in which a polymer having a unit derived from an amino group-containing monomer such as polyethylene imine is grafted to a carboxyl group-containing (meth)acrylic polymer. More specifically, Polyment NK350 manufactured by Nippon Shokubai can be used. Moreover, NK380 (trade name), SK1000 (trade name) and BASF Luvitec (trade name) manufactured by Nippon Shokubai, as well as Eudragit (trade name) manufactured by Degussa can be used.

Specific examples of crosslinking agents that can be used which have a functional group that reacts with a carboxyl group include bisamide-based crosslinking agents (such as RD1054 manufactured by 3M), aziridine-based crosslinking agents (such as Chemitite PZ33 manufactured by Nippon Shokubai and NeoCryl CX-100 manufactured by Avecia), carbodiimide-based crosslinking agents (such as Carbodilite V-03, V-05 and V-07 manufactured by Nisshinbo) and epoxy-based crosslinking agents (such as E-AX, E-5XM and E5C manufactured by Soken Chemical & Engineering). The amount of this crosslinking agent added is 0.01 to 0.5 equivalents with respect to the carboxyl group-containing monomer.

On the other hand, specific examples of crosslinking agents having a function group capable of reacting with an amino group include isocyanate-based crosslinking agents (such as Coronate L and Coronate HK manufactured by Nippon Polyurethane Industry, and Desmodur H, Desmodur W and Desmodur I manufactured by Bayer). The amount of this crosslinking agent added is 0.01 to 0.5 equivalents with respect to amino group-containing monomer.

An image receiving sheet composed of a base material having an image receiving layer can be obtained by forming a solution or melt containing the aforementioned carboxyl group-containing (meth)acrylic polymer, amino group-containing (meth)acrylic polymer and crosslinking agent, or a solution or melt containing a (meth)acrylic polymer containing a carboxyl group and an amino group along with a crosslinking agent and applying onto the base material followed by solidifying and crosslinking. Alternatively, an image receiving sheet composed of an image receiving layer can be obtained by forming an image receiving layer on a release-treated base material and applying a polymer solution composing a base material thereon followed by drying and crosslinking, or by applying a monomer or oligomer solution and polymerizing followed by drying and crosslinking to form the base material, and finally releasing the laminate of the image receiving layer and base material from the release-treated base material. An ordinary coater such as a bar coater, knife coater, roll coater or die coater can be used for the coating device. The solidification and crosslinking procedures are the same as the drying procedure in the case of paints containing a volatile solvent, and the cooling procedure for molten resin components. In addition, in the case of a thick layer or in the case of forming an image receiving sheet composed of an image receiving layer, they can be formed by molten extrusion molding. Moreover, in the case of forming an image receiving sheet composed of an image receiving layer, a film composed of an image receiving material can be formed by using a release-treated film for the aforementioned base material followed by coating, drying and solidification and finally releasing of the base material.

An image receiving sheet can be made into an image receiving sheet with adhesive by forming an adhesive layer on the opposite side of the base material from the side having the image receiving layer. The adhesive layer is formed by applying a layer of acrylic adhesive and so forth onto the base material.

There are no limitations on the thickness of the layer in the case of using as an image receiving layer provided the effects of the image receiving material of the present invention are obtained on the base material. For example, if the thickness of the image receiving layer is 1 µm or more, printing appearance and ink adhesion are superior in both inkjet printing and electrostatic recording toner image thermal transfer, the resulting image is resistant to solvent, and ink drying during ink jet printing is satisfactory. On the other hand, the thickness of the image receiving layer is preferably 50 µm or less from the viewpoint of the ease of application of the solution for forming the receiving layer and surface smoothness.

One or more types of conventionally known additives such as an antioxidant, ultraviolet absorber, photostabilizer, plasticizer, lubricant, antistatic agent, flame retardant or filler may be added to an image receiving material of the present invention. However, an image receiving material of the present invention is able to form an image receiving layer having adequate flexibility without adding a significant amount of plasticizer or without adding any plasticizer whatsoever. Since an image receiving material of the present invention is not required to contain a significant amount of a plasticizer, there is no transfer of a significant amount of plasticizer to the printed surface, and adhesion between the ink and image receiving surface is not impaired.

In addition, since there are cases in which saturation decreases during ink jet printing in the case of a colored film in which a pigment or other colorant has been added to an image receiving material for the purpose of imparting opaqueness, the image receiving layer is preferably transparent.

As was previously described, in one of its aspects, the present invention is an image receiving sheet in which an image receiving layer composed of an image receiving material is formed on a base material. There are no particular limitations on the base material that supports the image receiving layer, and any plastic film may be used. Examples of plastic film materials that can be used include polyolefin, polyvinyl chloride, acrylic polymer, polyester, polycarbonate and polyurethane. Primer treatment known in the prior art can be carried out to improve adhesion between the image receiving layer and base material. Acrylic polymer is preferable for the base material from the viewpoint of adhesion with the image receiving layer, weather resistance and other film properties. A base material having a composition that is similar to the polymer composition of an image receiving layer of the present invention is particularly preferable from the viewpoint of adhesion between the base material and image receiving layer, and a (meth)acrylic film formed from a carboxyl group-containing (meth)acrylic polymer and an amino group-containing (meth)acrylic polymer (such as that described in Japanese Unexamined Patent Publication No. 2005-105256) is particularly preferable. A polymer that is identical to a polymer that forms an image receiving layer of the present invention is most preferable. In addition, the base material is preferably colored in order to impart opacity, and can be given a substrate color by, for example, containing a colored pigment such as a white pigment like titanium dioxide in a plastic material. However, in the case of containing a pigment and so forth in the base material for the purpose of imparting opacity, there were cases in which saturation decreased even if an image was formed by ink jet printing on the base material itself. Namely, an image having superior saturation can be obtained by providing an image receiving layer composed of an image receiving material of the present invention that does not contain pigment on a base material that contains pigment.

Although an image receiving sheet of the present invention has an image receiving layer on one side of the base material, an adhesive layer may be permanently disposed on the back side thereof. Although a flat adhesive surface is normally formed for the adhesive layer, an non-flat adhesive surface may also be formed. This non-flat adhesive surface includes an adhesive surface in which protrusions containing adhesive and indentations surrounding the protrusions are formed on the adhesive side of the adhesive layer, and pathways that connect with the outside demarcated by the indentations are formed between the surface of an adhered material and the adhering surface in the state of being adhered to the adhered material.

Although there are no particular limitations on the adhesive of the adhesive layer, it is normally a pressure-sensitive adhesive that contains an adhesive polymer. A pressure-sensitive adhesive film in the form of a single-layer film containing an adhesive polymer or a double-sided adhesive sheet having two pressure-sensitive adhesive layers, for example, is preferably used for the adhesive layer of such a pressure-sensitive adhesive.

The adhesive layer can be formed, for example, from a coated film of an adhesive containing an adhesive polymer. A preferable adhesive contains an adhesive polymer and a crosslinking agent that crosslinks the adhesive polymer. IN the present specification, an adhesive polymer refers to a polymer that demonstrates adhesion at room temperature (about 25°C). Examples of adhesive polymers that can be used include acrylic polymer, polyurethane, polyolefin and polyester.

The following provides an explanation of an example of the synthesis of an adhesive polymer using the example of an acrylic polymer. First, an acrylic unsaturated acid (such as acrylic acid, methacrylic acid, itaconic acid or maleic acid) or a polar (meth)acrylic monomer such as acrylonitrile is obtained for use as the first monomer. This first monomer and a second monomer in the form of acrylic monomer are mixed to prepare a monomer mixture. Examples of monomers that can be used as the second monomer include alkyl acrylates such as isooctyl acrylate, butyl acrylate, 2-methylbutyl acrylate, 2-ethylhexyl acrylate and isononyl acrylate. The monomer mixture prepared in this manner is then subjected to an ordinary polymerization method such as solution polymerization, emulsion polymerization or bulk polymerization to synthesize an adhesive polymer of a predetermined molecular weight.

In the case of using a crosslinking agent for crosslinking the adhesive polymer, although varying according to the type of crosslinking agent, the amount of crosslinking agent added is normally 0.02 to 2 parts by weight, and preferably 0.03 to 1 part by weight, with respect to 100 parts by weight of the adhesive polymer. Examples of crosslinking agents that can be used include isocyanate compounds, melamine compounds, poly(meth)acrylate compounds, epoxy compounds, amide compounds and bisamide compounds (bis-aziridine derivatives of dibasic acids such as isophthaloylbis(2-methylaziridine)).

The glass transition temperature (Tg) of the adhesive layer is preferably -50 to 0°C and particularly preferably -45 to -5°C. If the Tg of the adhesive layer is too high, there is the risk of the adhesion between the adhered material and the image receiving sheet decreasing, while conversely if the Tg is too low, in the case of storing the image receiving sheet by rolling into the shape of a roll, there is the risk of the adhesive bleeds from the sides of the roll (side portions), thereby being unable to prevent mutually overlapped image receiving sheets from sticking together. Furthermore, the Tg of the adhesive layer is the value determined as the peak value of tanδ measured using a dynamic viscoelasticity measuring device (Rheometric Scientific Inc., RDA-II). Measurement conditions consist of measuring in the torsion mode at a shear rate of 1 radian/second, using a heating range of -60 to 100°C, and a heating rate of 5°C/second. The thickness of the sample is normally 1 to 2 µm.

The thickness of the adhesive layer is normally 5 to 200 µm, preferably 20 to 100 µm, and more preferably 25 to 80 µm. In addition, the pressure-sensitive adhesive layer may contain an additive such as an adhesive agent, elastic microspheres, tacky polymer microspheres, crystalline polymer, inorganic powder or ultraviolet absorber provided it does not impair the effects of the present invention.

Subsequently, a marking film can be formed by forming an image on the surface of an image receiving sheet of the present invention by a toner or an ink jet printing ink, and disposing a protective film thereon as necessary. In the case of forming an image by ink jet printing, the image can be formed directly on the image receiving layer of the image receiving sheet using ink jet technology. In the case of electrostatic toner printing, an image can be formed by temporarily forming an image on a temporary support referred to as a transfer medium, and then transferring the image to the surface of the image receiving layer of the image receiving sheet by heating and pressurization.

A protective film is used for the purpose of preventing image deterioration caused such as by toner falling off after printing. The protective film is optically transparent as a whole. The light transmittance is normally 60% or more, preferably 70% or more and particularly preferably 80% or more. "Light transmittance" as referred in this specification refers to the total light transmittance as measured using light at 550 nm and a spectrophotometer or color meter equipped with a photometer function.

The protective film is preferably a resin film containing a highly transparent resin. Examples of resins of the resin film include fluororesins, phthalate-based polyesters (PET or PEN), acrylic resins and petroleum-resistant resins. Fluororesins are polymers obtained by polymerizing fluorine-based monomers. Examples of fluorine-based monomers include vinylidene fluoride, propylene hexafluoride, ethylene tetrafluoride, ethylene trifluorochloride and other fluorine-based ethylene monomers. In addition to fluorine-based monomers, one type or two or more types of copolymerizeable monomers may be mixed, examples of which include methacrylates such as methyl methacrylate, ethyl methacrylate, propyl methacrylate and butyl methacrylate, and acrylates such as methyl acrylate, ethyl acrylate, propyl acrylate and butyl acrylate. In addition, a protective film may also be formed from a resin composition consisting of a blend of fluororesin and acrylic resin. Furthermore, the thickness of the protective film is normally 5 to 120 µm and particularly preferably 10 to 100 µm.

A protective film adhesive is normally used to adhere the protective film to the image receiving sheet following image formation. Although there are no particular limitations on the adhesive of the protective film adhesive layer, it is normally a pressure-sensitive adhesive that contains an adhesive polymer. This is because an adhesive polymer is able to satisfactorily follow the surface irregularities in the image receiving sheet formed by toner and so forth and mutually adhere them so as not to leave any air bubbles between the protective film and image receiving sheet. Since air bubbles lower image legibility, it is preferable to ensure that air bubbles do not remain. The thickness of this protective film adhesive layer is normally 20 to 100 µm and particularly preferably 25 to 80 µm.

The total thickness of a marking film , in which an image is formed on an image receiving sheet of the present invention having an image receiving layer on one side of a base material and an adhesive layer on the opposite side thereof, and a protective film is disposed as necessary on that image, is normally 30 to 1500 µm and preferably 50 to 950 µm. If the marking film is too thin, mechanical strength decreases and there is the risk of the marking film being damaged in the case of re-separating the marking film after adhering to an adhered material. In contrast, if the marking film is too thick, there is the risk of a decrease in the flexibility of the marking film.

### Examples

The following provides a more detailed explanation of the present invention based on examples thereof.

### 1. Resin Preparation

### 1.1 Preparation of (Meth)acrylic Resin 1

First, 60 parts by weight of methyl methacrylate (MMA), 34 parts by weight of butyl methacrylate (BMA) and 6 parts by weight of dimethylamino ethyl methacrylate (DMAEMA) were dissolved in 150 parts by weight of ethyl acetate, and after adding 0.5 parts by weight of polymerization initiator in the form of bis-2,4-dimethylvaleronitrile (AVN), were allowed to react for 20 hours at 50°C in a nitrogen atmosphere to prepare an ethyl acetate solution of an amino group-containing (meth)acrylic polymer. The intrinsic viscosity of this amino group-containing (meth)acrylic polymer at 25°C was 0.33.

### 1.2 Preparation of (Meth)acrylic Resin 2

A methyl ethyl ketone (MEK) solution of a carboxyl group-containing (meth)acrylic polymer was prepared by following the same procedure as the aforementioned (meth)acrylic resin 1 using 94 parts by weight of butyl acrylate (BA) and 6 parts by weight of acrylic acid (AA) instead of 60 parts by weight of methyl methacrylate (MMA), 34 parts by weight of butyl methacrylate (BMA) and 6 parts by weight of dimethylamino ethyl methacrylate (DMAEMA). The intrinsic viscosity of this carboxyl group-containing (meth)acrylic polymer at 25°C was 0.60.

### 1.3 Preparation of (Meth)acrylic Resin 3

Polyment NK350 (trade name) manufactured by Nippon Shokubai was used without modification. This (meth)acrylic resin is the product of grafting polyethylene imine to a copolymer consisting of methyl methacrylate (MMA), butyl acrylate (BA), butyl methacrylate (BMA) and methyl acrylate (MA), and was provided in the form of a solution in toluene and isopropyl alcohol. Its weight average molecular weight (Mw) is indicated as being about 100,000, and its amine hydrogen equivalent is described as being 1400.

### 1.4 Preparation of (Meth)Acrylic Resin 4

An MEK solution of a (meth)acrylic polymer containing neither a carboxyl group or amino group was prepared by following the same procedure as the aforementioned (meth)acrylic resin 1 using 64 parts by weight of methyl methacrylate (MMA), 24 parts by weight of butyl methacrylate (BMA), 7 parts by weight of methyl acrylate (MA) and 5 parts by weight of styrene (St) instead of 60 parts by weight of methyl methacrylate (MMA), 34 parts by weight of butyl methacrylate (BMA) and 6 parts by weight of dimethylamino ethyl methacrylate (DMAEMA).

### 1.5 Preparation of (Meth)acrylic Resin 5

An MEK solution of a (meth)acrylic polymer containing neither a carboxyl group or an amino group was prepared by following the same procedure as the aforementioned (meth)acrylic resin 1 using 65 parts by weight of methyl methacrylate (MMA) and 35 parts by weight of butyl methacrylate (BMA) instead of 60 parts by weight of methyl methacrylate (MMA), 34 parts by weight of butyl methacrylate (BMA) and 6 parts by weight of dimethylamino ethyl methacrylate (DMAEMA).

### Example 1

An acrylic polymer solution was prepared by blending 100 parts by weight (solid component) of (meth)acrylic resin 1, and 65 parts by weight (solid component) of (meth)acrylic resin 2. Next, bisamide-based crosslinking agent (RD 1054, 3M) was added at an amount of 1.1 % relative to the weight of (meth)acrylic resin 2 to form an image receiving layer composition. At this time, the equivalent ratio of the crosslinking agent to the carboxyl group was 0.1. The image receiving layer composition was applied to a 50 µm separation-treated polyester film with a knife coater followed by drying and crosslinking for 5 minutes at 95°C and 2 minutes at 155°C to form an image receiving layer having a thickness of 20 µm.

Next, a white acrylic solution containing 100 parts by weight (solid component) of (meth)acrylic resin 1, 80 parts by weight (solid component) of (meth)acrylic resin 2 and 90 parts by weight of titanium dioxide particles was prepared in the form of an MEK solution. Next, a bisamide crosslinking agent (RD1054, 3M) was added at an amount of 1.1% relative to the weight of (meth)acrylic resin 2 (solid component), and a base material composition was applied to the image receiving layer formed with the base material composition with a knife coater followed by drying and crosslinking for 5 minutes at 95°C and 2 minutes at 155°C to form a base material for an image receiving layer support having a thickness of 60 µm. Subsequently, the separation-treated polyester film was separated to obtain an image receiving sheet having an image receiving layer on a base material.

Next, an ethyl acetate solution of an acrylic adhesive was prepared consisting of a copolymer of isooctyl acrylate (IOA), methyl acrylate (MA) and acrylic acid (AA) at a compositional ratio of 70/22.5/7.5 (weight ratio). The weight average molecular weight of this copolymer was 360,000. A bisamide-based crosslinking agent (RD1054, 3M) was added to this solution at an amount such that the ratio of acrylic copolymer to crosslinking agent was 100:1.7 (weight ratio of solid components) to form an adhesive composition. This adhesive composition was then applied to a paper-based double-sided polyethylene laminated release paper with a knife coater to a thickness after drying of 30 µm. This was then dried and crosslinked by heating for 5 minutes at 90°C. Subsequently, the aforementioned image receiving sheet was dry laminated so as to contact the adhesive of the resulting release paper to form an image receiving sheet with adhesive composed of a release paper, adhesive layer, white acrylic resin base material and transparent acrylic image receiving layer.

### Example 2

Although an image receiving sheet with adhesive was formed in the same manner as Example 1,0.6% of bisamide-based crosslinking agent (RD1054, 3M) with respect to (meth)acrylic resin 2 (solid component) was added to a solution containing 100 parts by weight (solid component) of (meth)acrylic resin 1 and 80 parts by weight (solid component) of (meth)acrylic resin 2 so that the equivalent ratio of the crosslinking agent to the carboxyl group was 0.05 for use as the image receiving layer composition. In addition, 0.6% of bisamide-based crosslinking agent (RD1054, 3M) relative to the weight of (meth)acrylic resin 2 (solid component) was added to a white acrylic solution containing 100 parts by weight (solid component) of (meth)acrylic resin 1, 80 parts by weight (solid component) of (meth)acrylic resin 2 and 90 parts by weight of titanium dioxide particles for use as the base material composition.

### Example 3

Although an image receiving sheet with adhesive was formed in the same manner as Example 1,0.5% of an epoxy-based crosslinking agent (E-AX (trade name), Soken Chemical and Engineering) relative to the weight of (meth)acrylic resin 3 (solid component) was added to a solution of (meth)acrylic resin 3 so that the equivalent ratio of the crosslinking agent to the carboxyl group was 0.1 for use as the image receiving layer composition. In addition, an image receiving sheet with adhesive was formed in the same manner as Example 1 using the same base material composition and adhesive as Example 1.

### Example 4

A base film was obtained by similarly dry laminating the same adhesive composition as Example 1 to a 100 µm olefin-based white film (WT001, Mitsubishi Chemical). Next, the same image receiving layer composition as Example 1 was applied to the base film with a knife coater followed by drying and crosslinking for 5 minutes at 90°C to form an image receiving layer having a thickness of 20 µm and obtain an image receiving sheet with adhesive.

### Example 5

An image receiving sheet with adhesive was produced in the same manner as Example 4 with the exception of making the thickness of the image receiving layer 10 µm.

### Example 6

A bisamide-based crosslinking agent was added at an amount of 1.1% relative to the weight of (meth)acrylic resin 2 (solid component) to a white acrylic solution containing 100 parts by weight (solid component) of (meth)acrylic resin 1, 80 parts by weight (solid component) of (meth)acrylic resin 2 and 90 parts by weight of titanium dioxide particles for use as an image receiving layer composition. The equivalent ratio of the crosslinking agent to the carboxyl group was 0.1. This was then applied to a 50 µm separation-treated polyester film followed by drying and crosslinking for 5 minutes at 95°C and for 2 minutes at 155°C to form a white image receiving layer having a thickness of 40 µm. This was then dry laminated with the same adhesive with release paper as Example 1 so that the white image receiving layer contacted the adhesive side to obtain an image receiving sheet composed of a white image receiving layer, adhesive and release paper. Furthermore, this sheet did not contain a base material that supports the image receiving layer, and employed a structure in which the image receiving layer was directly adhered to the adhesive layer.

### Example 7

Although an image receiving sheet with adhesive was formed in the same manner as Example 1, the amount of the crosslinking agent in the image receiving layer was made to be 0.4 equivalents relative to the carboxyl group.

### Comparative Example 1

A transparent film having a thickness of 80 µm was obtained with an extruder by adding 30 parts by weight of a polyester-based plasticizer to 100 parts by weight of (meth)acrylic resin 4 followed by kneading at about 200°C. An adhesive layer was then laminated in the same manner as Example 1.

### Comparative Example 2

A transparent film having a thickness of 60 µm was obtained with an extruder by adding 50 parts by weight of titanium dioxide to 100 parts by weight of (meth)acrylic resin 5 followed by kneading at about 200°C. An adhesive layer was then laminated in the same manner as Example 1.

### Comparative Example 3

A white vinyl chloride resin film with adhesive (Control Tack Film RG180-10, 3M) was used as an image receiving sheet with adhesive.

### Comparative Example 4

A sheet was formed in same manner as Example 4 with the exception of not providing an image receiving layer.

### Comparative Example 5

An image receiving sheet was formed in the same manner as Example 1 with the exception of not adding a crosslinking agent in the image receiving layer.

### Comparative Example 6

An image receiving sheet was formed in the same manner as Example 1 with the exception of changing the crosslinked density so that the amount of crosslinking agent was 1.0 equivalents relative to the carboxyl group in the image receiving layer.

### 2. Evaluation

### 2.1 Tg of Image Receiving Layer

The glass transition temperature (Tg) of the material that composes the image receiving layer was measured. The glass transition temperature (Tg) is the glass transition temperature (Tg) of the (meth)acrylic polymer after crosslinking, and is the value measured as a temperature of the peak of tanδ by a dynamic viscoelasticity measuring device (Rheometric Scientific Inc., RDA-II) over a temperature range of -20 to 150°C while increasing the temperature at the rate of 5°C/second under conditions of a tensile mode, tensile strain of 0.1 % (maximum elongation relative to the initial length of the measurement sample) and frequency of 10 Hz, and using a sample having a film thickness of 50 µm and film width of 1 cm.

### 2.2 Appearance of Ink Jet Printing

Images were formed on an image receiving sheet with a solvent-based ink jet printer (SPZ1600M, Sumitomo 3M). The conditions of image formation consisted of bidirectional printing, 8 passes, 6-colored ink (cyan, magenta, yellow, black, light cyan and light magenta), resolution of 720 dpi (dot per inch) and the standard printing speed (0.1 m²/minute). Image quality was then evaluated visually.

Images that were clear and had high saturation were evaluated.as "good", those that were clear but had slightly low saturation were evaluated as "intermediate", and those that were unclear and demonstrated bleeding were evaluated as "poor".

### 2.3 Appearance of Electrostatic Toner Thermal Transfer

Digital images for image transfer were formed on transfer media (Trident, 3M) with the ScotchPrint 2000 System (electrostatic printer manufactured by 3M). Next, the images were transferred to the aforementioned image receiving sheets using a heat laminator (Orca III, 3M). The settings of the Orca III consisted of the upper roll temperature of 135°C, lower roll temperature of 50°C, speed of 70 cm/minute and pressure of 60 psi. The paper carrier of the Trident was removed and the quality of toner image transfer was evaluated visually.

Those toner images that were completely transferred were evaluated as "good", while those in which a portion of the toner remained on the paper carrier image were evaluated as "poor".

### 2.4 Ink Adhesion

100 cuts were made (10 x 10 cuts in a 1 mm x 1 mm square) in a checkerboard pattern in the printed ink and toner, #610 tape manufactured by 3M was affixed to the pattern and then quickly peeled off followed by measurement of the number of squares that remained on the image receiving sheet. Ink adhesion was evaluated as good and the results were recorded as 100/100 if there was no transfer of the ink or toner to the tape and all 100 square remained, while ink adhesion was evaluated as poor and the results were recorded as 0/100 if all 100 of the squares had been transferred to the tape.

### 2.5 Solvent Resistance

The appearance of the image receiving sheets immediately after printing at 300% of the ink concentration with the SPZ1600M was confirmed visually. Solvent resistance was evaluated as "good" if there were no abnormalities in the appearance of the film, and "poor" if wrinkles had formed in the film.

### 2.6 Drying

Drying was evaluated by touching after printing at 300% of the ink concentration with the SPZ1600M. Drying was evaluated as "good" if there was no stickiness when touched within 30 seconds after printing, "intermediate" if there was no longer any stickiness from 30 seconds to 10 minutes after printing, and "poor" if there was still stickiness for more than 10 minutes after printing.

The results of evaluating the examples and comparative examples are shown in the following table.

**[Table 1]**

| | Resin A | Resin B | Glass transition temperature °C | Crosslinking agent | Crosslinked density | Blending Ratio A:B | IJ Printing Appearance | Thermal transfer appearance | Ink adhesion | Solvent resistance | Drying |
|---|---|---|---|---|---|---|---|---|---|---|---|
| Ex. 1 | (Meth)acrylic resin 1 | (Meth)acrylic resin 2 | 68 | Bisamide-based | 0.1 equivalent s | 100:65 | Good | Good | 100/100 | Good | Good |
| Ex. 2 | (Meth)acrylic resin 1 | (Meth)acrylic resin 2 | 65 | Bisamide-based | 0.05 equivalent s | 100:80 | Good | Good | 100/100 | Good | Good |
| Ex. 3 | Meth(acrylic resin 3 | - | 66 | | 0.1 equivalent s | - | Good | Good | 100/100 | Good | Good |
| Ex. 4 | (Meth)acrylic resin 1 | (Meth)acrylic resin 2 | 66 | Bisamide-based | 0.1 equivalent s | 100:65 | Good | Good | 100/100 | Good | Good |
| Ex. 5 | (Meth)acrylic resin 1 | (Meth)acrylic resin 2 | 66 | Bisamide-based | 0.1 equivalent s | 100:65 | Good | Good | 100/100 | Good | Good |
| Ex. 6 | (Meth)acrylic resin 1 | (Meth)acrylic resin 2 | 68 | Bisamide-based | 0.1 equivalent s | 100:80 | Intermediate | Good | 100/100 | Good | Good |
| Ex. 7 | (Meth)acrylic resin 1 | (Meth)acrylic resin 2 | 69 | Bisamide-based | 0.4 equivalent s | 100:65 | Good | Good | 100/100 | Good | Good |
| Com p. Ex. 1 | (Meth)acrylic resin 4 | Polyester-based plasticizer | 85 | None | - | 100:30 | Good | Good | 50/100 | Good | Good |
| Com p. Ex. 2 | (Meth)acrylic resin 5 | None | 93 | None | - | -. | Intermediate | Good | 100/100 | Good | Intermediate |
| Com p. Ex. | Vinyl chloride resin 180-10 | - | - | None | - | - | Good | Good | 100/100 | Good | Intermediate |
| Com p. Ex. 4 | Olefin resin | - | - | None | - | - | Poor | Poor | 0/100 | Good | Poor |
| Com p. Ex. 5 | (Meth)acrylic resin 1 | (Meth)acrylic resin 2 | 63 | None | - | 100:65 | Good | Good | 100/100 | Poor | Good |
| Com p. Ex. 6 | (Meth)acrylic resin 1 | (Meth)acrylic resin 2 | 70 | Bisamide-based | 1.0 equivalent s | 100:65 | Poor | Good | 70/100 | Good | Poor |

## Claims

1. An image receiving material comprising an image receiving layer comprising (meth)acrylic polymer, the (meth)acrylic polymer containing a unit derived from a carboxyl group-containing monomer and a unit derived from an amino group-containing monomer, or a polymer blend of a (meth)acrylic polymer containing a unit derived from a carboxyl group-containing monomer and a (meth)acrylic polymer containing a unit derived from an amino group-containing polymer, is crosslinked by a crosslinking agent having a functional group that reacts with the carboxyl group or the amino group; wherein the total weight of the carboxyl group-containing monomer and the amino group-containing monomer is 0.5 to 10% by weight, based on the total weight of the monomers that compose the (meth)acrylic polymer,
wherein the crosslinked density of the crosslinked (meth)acrylic polymer is the crosslinked density formed by 0.01 to 0.5 equivalents of the crosslinking agent with respect to the carboxyl group or the amino group in the (meth)acrylic polymer that is reacted by the crosslinking agent, and wherein
the glass transition temperature (Tg) of the crosslinked (meth)acrylic polymer is 35 to 90°C.

2. An image receiving material as described in claim 1, wherein the carboxyl group-containing (meth)acrylic polymer is a carboxyl group-containing (meth)acrylic polymer obtained by copolymerizing a monoethylenic unsaturated monomer within a range of 90 to 95.5 parts by weight and a carboxyl group-containing unsaturated monomer within a range of 0.5 to 10 parts by weight, and the amino group-containing (meth)acrylic polymer is an amino group-containing (meth)acrylic polymer obtained by copolymerizing a monoethylenic unsaturated monomer within a range of 90 to 95.5 parts by weight and an amino group-containing unsaturated monomer within a range of 0.5 to 10 parts by weight.

3. An image receiving material as described in claim 1, wherein the (meth)acrylic polymer is the product of grafting polyethylene imine to a (meth)acrylic polymer of a carboxyl group-containing monomer.

4. An image receiving material as described in any of claims 1-3, wherein the crosslinking agent is a bisamide-based crosslinking agent.

5. An image receiving material as described in any of claims 1-3, wherein the crosslinking agent is an epoxy-based crosslinking agent.

6. An image receiving sheet comprising (i) a base material and (ii) an image receiving layer formed on the base material, the image receiving layer containing an image receiving material as described in any of claims 1-5.

7. An image receiving sheet as described in claim 6, wherein the base material is a (meth)acrylic polymer.

8. An image receiving sheet with adhesive layer having an adhesive layer on the opposite side of the base material of the image receiving sheet described in claim 6 or 7.

9. An image receiving sheet with adhesive layer comprising: a layer comprising an image receiving material described in any of claims 1-5 and an adhesive layer.

## Patentansprüche

1. Bildempfangsmaterial, welches eine Bildempfangsschicht umfasst, die ein (Meth)acrylpolymer umfasst, wobei das (Meth)acrylpolymer eine Einheit enthält, die aus einem carboxylgruppenhaltigen Monomer abgeleitet ist, und eine Einheit enthält, die aus einem aminogruppenhaltigen Monomer abgeleitet ist, oder ein Polymergemisch aus einem (Meth)acrylpolymer, das eine Einheit enthält, die aus einem carboxylgruppenhaltigen Monomer abgeleitet ist, und einem (Meth)acrylpolymer, das eine Einheit enthält, die aus einem aminogruppenhaltigen Monomer abgeleitet ist, durch ein Vernetzungsmittel vernetzt ist, welches eine funktionelle Gruppe aufweist, die mit der Carboxylgruppe oder der Aminogruppe reagiert; wobei das Gesamtgewicht des carboxylgruppenhaltigen Monomers und des aminogruppenhaltigen Monomers 0,5 bis 10 Gewichts-% beträgt, bezogen auf das Gesamtgewicht der Monomere, aus denen das (Meth)acrylpolymer zusammengesetzt ist,
wobei es sich bei der vernetzten Dichte des vernetzten (Meth)acrylpolymers um die vernetzte Dichte handelt, die durch 0,01 bis 0,5 Äquivalente des Vernetzungsmittels gebildet wird, bezogen auf die Carboxylgruppe oder die Aminogruppe in dem (Meth)acrylpolymer, das durch das Vernetzungsmittel zur Reaktion gebracht wird, und wobei
die Glasübergangstemperatur (Tg) des vernetzten (Meth)acrylpolymers 35 °C bis 90 °C beträgt.

2. Bildempfangsmaterial nach Anspruch 1, wobei es sich bei dem carboxylgruppenhaltigen (Meth)acrylpolymer um ein carboxylgruppenhaltiges (Meth)acrylpolymer handelt, das durch Copolymerisieren eines monoethylenisch ungesättigten Monomers in einem Bereich von 90 bis 95,5 Gewichtsteilen mit einem carboxylgruppenhaltigen ungesättigten Monomer in einem Bereich von 0,5 bis 10 Gewichtsteilen erhalten wird, und es sich bei dem aminogruppenhaltigen (Meth)acrylpolymer um ein aminogruppenhaltiges (Meth)acrylpolymer handelt, das durch Copolymerisieren eines monoethylenisch ungesättigten Monomers in einem Bereich von 90 bis 95,5 Gewichtsteilen mit einem aminogruppenhaltigen ungesättigten Monomer in einem Bereich von 0,5 bis 10 Gewichtsteilen erhalten wird.

3. Bildempfangsmaterial nach Anspruch 1, wobei das (Meth)acrylpolymer das Produkt des Aufpolymerisierens von Polyethylenimin auf ein (Meth)acrylpolymer eines carboxylgruppenhaltigen Monomers ist.

4. Bildempfangsmaterial nach einem der Ansprüche 1 bis 3, wobei es sich bei dem Vernetzungsmittel um ein Vernetzungsmittel auf Bisamid-Basis handelt.

5. Bildempfangsmaterial nach einem der Ansprüche 1 bis 3, wobei es sich bei dem Vernetzungsmittel um ein Vernetzungsmittel auf Epoxid-Basis handelt.

6. Bildempfangsblatt, welches (i) ein Basismaterial und (ii) eine Bildempfangsschicht umfasst, die auf dem Basismaterial ausgebildet ist, wobei die Bildempfangsschicht ein Bildempfangsmaterial nach einem der Ansprüche 1 bis 5 enthält.

7. Bildempfangsblatt nach Anspruch 6, wobei es sich bei dem Basismaterial um ein (Meth)acrylpolymer handelt.

8. Bildempfangsblatt mit Haftschicht, welche eine Haftschicht auf der gegenüberliegenden Seite des Basismaterials des Bildempfangsblatts nach Anspruch 6 oder 7 aufweist.

9. Bildempfangsblatt mit Haftschicht, welche eine Schicht umfasst, die ein Bildempfangsmaterial nach einem der Ansprüche 1 bis 5 und eine Haftschicht umfasst.

## Revendications

1. Matériau de réception d'image comprenant une couche de réception d'image comprenant un polymère (méth)acrylique, le polymère (méth)acrylique contenant un motif dérivé d'un monomère contenant un groupe carboxyle et un motif dérivé d'un monomère contenant un groupe amino, ou un mélange de polymères d'un polymère (méth)acrylique contenant un motif dérivé d'un monomère contenant un groupe carboxyle et un polymère (méth)acrylique contenant un motif dérivé d'un polymère contenant des groupes amino, étant réticulé par un agent de réticulation portant un groupe fonctionnel qui réagit avec le groupe carboxyle ou le groupe amino, dans lequel le poids total du monomère contenant un groupe carboxyle et du monomère contenant un groupe amino est de 0,5 à 10 % en poids, rapporté au poids total des monomères qui composent le polymère (méth)acrylique,
dans lequel la densité de réticulation du polymère (méth)acrylique réticulé est la densité de réticulation formée par 0,01 à 0,5 équivalent de l'agent de réticulation par rapport au groupe carboxyle ou au groupe amino dans le polymère (méth)acrylique que l'on fait réagir avec l'agent de réticulation, et
dans lequel la température de transition vitreuse (Tg) du polymère (méth)acrylique réticulé est de 35 à 90 °C.

2. Matériau de réception d'image selon la revendication 1, dans lequel le polymère (méth)acrylique contenant des groupes carboxyle est un polymère (méth)acrylique contenant des groupes carboxyle obtenu en copolymérisant un monomère monoéthylénique insaturé dans une fourchette de 90 à 95,5 parties en poids et un monomère insaturé contenant un groupe carboxyle dans une fourchette de 0,5 à 10 parties en poids, et le polymère (méth)acrylique contenant des groupes amino est un polymère (méth)acrylique contenant des groupes amino obtenu en copolymérisant un monomère monoéthylénique insaturé dans une fourchette de 90 à 95,5 parties en poids et un monomère insaturé contenant un groupe amino dans une fourchette de 0,5 à 10 parties en poids.

3. Matériau de réception d'image selon la revendication 1, dans lequel le polymère (méth)acrylique est le produit de la greffe d'une polyéthylène-imine sur un polymère (méth)acrylique d'un monomère contenant un groupe carboxyle.

4. Matériau de réception d'image selon l'une quelconque des revendications 1 à 3, dans lequel l'agent de réticulation est un agent de réticulation à base de bisamide.

5. Matériau de réception d'image selon l'une quelconque des revendications 1 à 3, dans lequel l'agent de réticulation est un agent de réticulation à base d'époxyde.

6. Feuille de réception d'image comprenant (i) un matériau de base et (ii) une couche de réception d'image formée sur le matériau de base, la couche de réception d'image contenant un matériau de réception d'image selon l'une quelconque des revendications 1 à 5.

7. Feuille de réception d'image selon la revendication 6, dans laquelle le matériau de base est un polymère (méth)acrylique.

8. Feuille de réception d'image avec couche adhésive, comportant une couche adhésive sur le côté opposé du matériau de base de la feuille de réception d'image selon la revendication 6 ou 7.

9. Feuille de réception d'image avec couche adhésive, comprenant une couche contenant un matériau de réception d'image selon l'une quelconque des revendications 1 à 5, et une couche adhésive.
